# EUROPEAN PATENT APPLICATION

(11) **EP 2 020 793 A1**
(43) Date of publication of application: **04.02.2009**
(21) Application number: 07015040.4
(22) Date of filing: 31.07.2007
(51) Int. Cl.: H04L 29/06

(54) **Method for data transmission in a mobile telecommunications system based on Proxy Mobile IPv6**

(71) Applicant: SIEMENS AKTIENGESELLSCHAFT, 80333 München (DE)
(72) Inventor: Görg, Carmelita, Prof., 28357 Bremen (DE); Kuladinthi, Koojana, 28357 Bremen (DE); Pangboonyanon, Varaporn, 28195 Bremen (DE); Pittmann, Frank, 12099 Berlin (DE); Udugama, Asanga, 28357 Bremen (DE)

(57) **Abstract**

The invention relates to a method for data transmission in a mobile telecommunications system having a mobility anchor (IMA), wherein a permanent address (PPA) is allocated by the mobility anchor (IMA) for a user device (UE). When moving from a first mobile access network (AN1) connected to a first access gateway (AG1) to a second mobile access network (AN2) connected to a second access gateway (AG2), the user device (UE) obtains a local address (PLA) associated with the second mobile access network (AN2). The second access gateway (AG2) informs the mobility anchor (IMA) about the local address (PLA). The mobility anchor (IMA) associates the local address (PLA) with the permanent address (PPA) of the user device (UE). First data packets being data packets destined to the permanent address (PPA) of the user device (UE) and/or second data packets being data packets originating from the permanent address (PPA) of the user device (UE) and destined to an address of a correspondent node are modified during transmission by inserting at least one routing header in the first and/or second data packets in order to include the local address (PLA) in the first and/or second data packets and changing the address stored in the at least one routing header such that the first data packets are transmitted via the mobility anchor (IMA) to the user device (UE) and/or the second data packets are transmitted via the mobility anchor (IMA) to the correspondent node.

## Description

The invention refers to a method for data transmission in a mobile telecommunications system. Furthermore, the invention refers to a corresponding mobile telecommunications system.

Telecommunication networks, especially established and newly developed 3GPP mobile networks, have to support an increasing number of heterogeneous mobile access technologies and the use of different mobile access technologies for the core network is an important issue. Particularly, it is desirable to provide seamless continuity of connectivity and services when a user device moves from one access network to another.

Many prior art technologies implement mobility management in mobile networks by using tunnelling, e.g. based on the GPRS tunnelling protocol. Tunnelling has the disadvantage that a data overhead is produced during data transmission.

It is an object of the invention to provide a method for data transmission in a mobile telecommunications system providing an easy and efficient mobility management enabling seamless continuity of connectivity and services when a user device moves between mobile access networks.

The method according to the invention is used in mobile telecommunications systems having a mobility anchor. In step a), a permanent address is allocated by the mobility anchor for a user device. This address is particularly only allocated once, namely when the user device is switched on.

When the user device moves from a first mobile access network connected to a first access gateway to a second mobile access network connected to a second access gateway, it obtains a local address associated with the second mobile network (step b)). The second access gateway informs the mobility anchor about this local address (step c)). In a step d), the mobility anchor associates the local address with the permanent address of the user device.

Thereafter, the data transmission is performed as follows (step e)) :
First data packets being data packets destined to the permanent address of the user device and/or second data packets being data packets originated from the permanent address of the user device and destined to an address of a correspondent node are modified during transmission by
- inserting at least one routing header in the first and/or second data packets in order to include the local address in the first and/or second data packets;
- changing the address stored in the at least one routing header such that the first data packets are transmitted via the mobility anchor to the user device and/or the second data packets are transmitted via the mobility anchor to the correspondent node.

The method of the invention is characterized by using a local address associated with a permanent address of a user device and at least one routing header in the transmitted data packets in order to enable an efficient data transmission without establishing a tunnel. Therefore, the data overhead in the method according to the invention is reduced.

In a preferred embodiment of the invention, the first data packets are modified by the mobility anchor such that the local address is inserted in the destination address field and the permanent address is inserted in a first type routing header. As a consequence, the first data packets are transmitted to the current location, i.e. the local address, of the user device. These modified first data packets arriving in the user device are further modified by the user device such that the address in the destination address field is replaced with the address in the first type routing header. Since this new destination address is now the permanent address of the user device, the packet will be used by the user device and not routed out.

In order to ensure that the mobility anchor will receive the first data packets, a proxy neighbor discovery mechanism which is a well-known technique is used by the mobility anchor. I.e., the mobility anchor will capture the first data packets by the proxy neighbor discovery mechanism. The data packets being captured are identified by the mobility anchor with the permanent address of the user device which is the destination address of the first data packets before modification.

In another embodiment of the invention, the second data packets are modified by the user device such that the local address is inserted in the source address field, the destination address of the correspondent node is inserted in a first type routing header, the permanent address is inserted in a second type routing header and the address of the mobility anchor is inserted in the destination address field. As a consequence, the second data packets will arrive at the mobility anchor. Thereafter, those modified second data packets having arrived in the mobility anchor will be modified once again by the mobility anchor such that the address in the destination address field is replaced with the address in the first type routing header and the address in the source address field is replaced with the address in the second type routing header. I.e., the permanent address of the user device will be the source of the data packets and the address of the correspondent node will be the destination of the packets. Thus, the second data packets are correctly transmitted to the correspondent node.

In another embodiment of the invention, the first and/or second data packets are IPv6 data packets. IPv6 is a well-known Internet Protocol. By using this protocol, already known routing headers may be inserted, particularly a Type 2 routing header may be used as the first type routing header and a Type 5 routing header may be used as the second type routing header.

Preferably, a local network prefix specifying a range of addresses is allocated by the second access gateway and the user device extracts in step b) one address of this range of addresses as the local address, particularly the first address in the range of addresses.

Similarly to the above step b) being performed when a user device moves from the first mobile access network to the second mobile access network, a local address may also be used when the user device is located in the first mobile access network. I.e., the user device may obtain a first local address associated with the first mobile access network when located in the first mobile access network. When the user device moves to the second mobile access network, this first local address will be replaced by the local address obtained in the above step b). This first local address may also be generated by the use of a prefix. Particularly, in a preferred embodiment, a local network prefix specifying a range of addresses is allocated by the first access gateway and the user device extracts one address of this range of addresses as the first local address, preferably the first address in the range of addresses.

In a preferred embodiment of the invention, the association between the local address and the permanent address of the user device is performed by a location resolution list. This location resolution list is maintained by the mobility anchor and associates the permanent address of the user device with a current local address specifying the mobile access network to which the user device is attached. When using such a list, the mobility anchor will update the location resolution list by the local address associated with the second mobile access network, when the user device moves from the first mobile access network to the second mobile access network.

The method of the invention may be used for different mobile radio access technologies. Particularly, the first and/or the second mobile access networks may be a 3GPP access networks, e.g. a GSM access network and/or a UMTS access network and/or a SAE/LTE access network (GSM = Global System for Mobile Communication, UMTS = Universal Mobile Telecommunications Service, SAE/LTE = System Architecture Evolution/Long Term Evolution). Furthermore, one of the first and second mobile access networks may also be a non 3GPP network, for example an interworking WLAN network I-WLAN.

Beside the above described method, the invention also relates to a mobile telecommunications system comprising a mobility anchor, a first mobile access network connected to a first access gateway and a second mobile access network connected to a second access gateway, wherein:
- the mobility anchor is adapted to allocate a permanent address for a user device;
- when moving from the first mobile access network to the second mobile access network, the user device is adapted to obtain a local address associated with the second mobile access network;
- the second access gateway is adapted to inform the mobility anchor about the local address;
- the mobility anchor is adapted to associate the local address with the permanent address of the user device;
- the system enables a processing of data packets such that first data packets being data packets destined to the permanent address of the user device and/or second data packets being data packets originating from the permanent address of the user device and destined to an address of a correspondent node are modified during transmission by
- inserting at least one routing header in the first and/or second data packets in order to include the local address in the first and/or second data packets;
- changing the address stored in the at least one routing header during data transmission such that the first data packets are transmitted via the mobility anchor to the user device and/or the second data packets are transmitted via the mobility anchor to the correspondent node.
   The above defined mobile telecommunications system has the same advantages as the above described method. The system is preferably adapted such that any of the above mentioned preferred embodiments of the method may be performed by the telecommunications system.

Embodiments of the invention will be described in detail with respect to the attached drawings wherein
- Fig. 1: is a schematic view of a mobile telecommunication system in which the method of the invention may be implemented;
- Fig. 2: is a diagram illustrating a message flow in one embodiment of the invention; and
- Fig. 3: is a schematic view of another embodiment of a mobile telecommunications system in which the method according to the invention may be implemented.

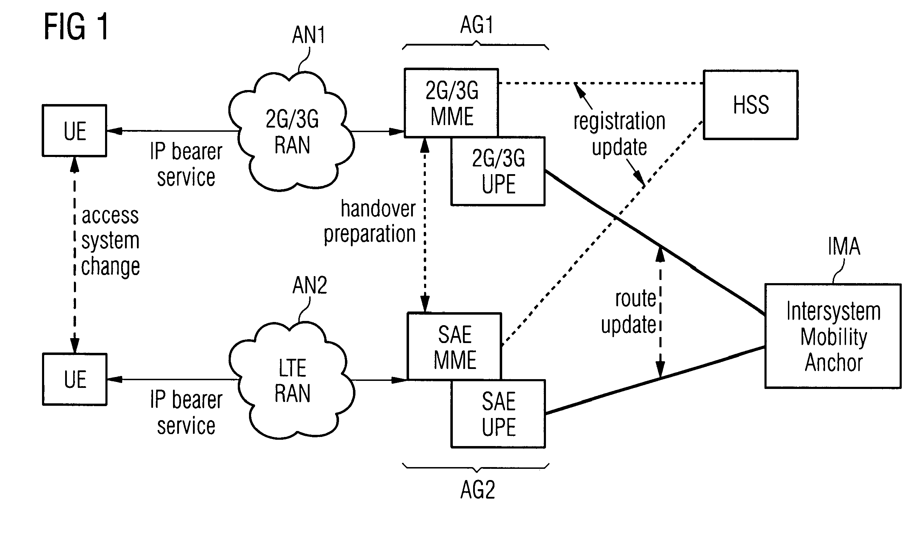

Fig. 1 shows a schematic view of heterogeneous 3GPP networks comprising a legacy 2G/3G RAN (RAN = Radio Access Network) AN1 as well as a new LTE RAN network (LTE = Long Term Evolution) AN2 which is currently developed and subject to ongoing 3GGP standardization (see document [1]). The mobile access network AN1 is connected to an access gateway AG1 being the gateway to a packet switched core network. The access gateway AG1 comprises the functional units 2G/3G MME (MME = Mobility Management Entity) and 2G/3G UPE (UPE = User Plane Entity) which are well known components and will not be described in detail. Analogously to the access network AN1, the mobile access network AN2 is connected to a corresponding access gateway AG2 comprising the functional units SAE MME and SAE UPE (SAE = System Architecture Evolution). These are known components of the newly developed SAE/LTE 3GPP networks.

Fig. 1 illustrates a handover when a user equipment UE changes its access network between AN1 and AN2. A handover preparation is performed as well as a registration update registering the new target MME with the Home Subscriber System HSS being responsible for the user equipment UE. As a result of the handover, a route update is established, thus enabling a data transmission between the UE attached to the new mobile access network and a correspondent node via a Intersystem Mobility Anchor IMA which is a network component in the core network responsible for mobility management.

In document [1], several solutions are described in order to enable a mobility management between two mobile access networks via a handover as illustrated in Fig. 1. All solutions described in document [1] have the disadvantage that additional overhead is produced by using tunnelling mechanisms. Contrary to that, the method described hereinafter avoids the use of tunnelling and provides a straightforward and easy solution for enabling mobility between mobile access networks.

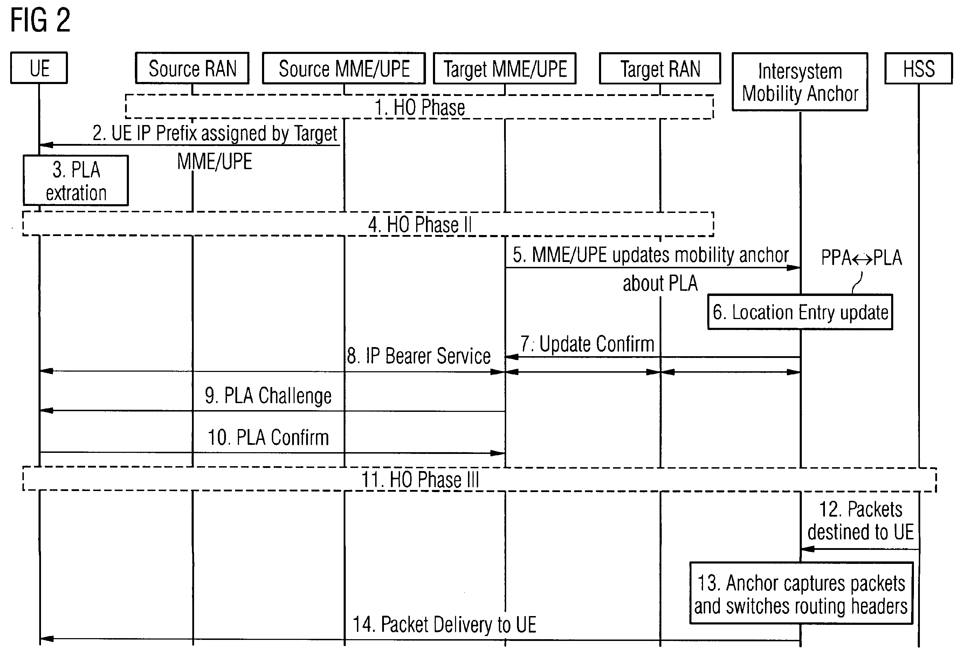

In Fig. 2, a message flow for providing a data transmission according to one embodiment of the invention is shown. The message flow takes place between the following components:
- user equipment UE,
- source RAN and source MMP/UPE forming the mobile access network to which the UE is attached at first,
- target MME/UPE and target RAN forming the mobile access network to which the UE will change,
- the Intersystem Mobility Anchor of the UE,
- the Home Subscriber System HSS of the UE.

The diagram according to Fig. 2 shows the handover phases I, II and III (HO = Handover) and a subsequent transmission of data packets to the UE.

At the beginning of the process of Fig. 2, an IP bearer exists between the user equipment UE, the source RAN, the source MME/UPE and the Intersystem Mobility Anchor. In the handover phase I (step 1), the handover is initiated by the source RAN and the source RAN informs the source MME/UPE that a handover is required. Thereafter, the target MME/UPE is selected by the source MME/UPE. A handover preparation request is sent from the source MME/UPE to the target MME/UPE. In a next step, an IPv6 address prefix is assigned to the UE by the target MME/UPE. Thereafter, a setup of necessary resources in the target access between the target access entities is performed. At the end of the handover phase I, a handover preparation confirmation including the assigned IPv6 prefix is sent from the target MME/UPE to the source MME/UPE.

In step 2 of Fig. 2, the UE IP address prefix as assigned by the target MME/UPE is sent by the source MME/UPE to the UE. This step may be based on procedures of any well-known Dynamic IPv6 Address Allocation.

In step 3, the UE extracts a primary local IPv6 address PLA from the local IPv6 prefix assigned by the target MME/UPE and sent via the source access gateway in step 2. This primary local IPv6 address PLA corresponds to the local address as defined in claim 1. In the embodiment described herein, the first address of the local IPv6 prefix is used per definition by the UE as its primary local address PLA.

In step 4, the handover phase II takes place. In this phase, a handover command is sent from the source access gateway to the UE. Thereafter, depending on the required QoS (QoS = Quality of Service), actions may be performed between the source and the target access gateways in order to minimize data loss and/or to shorten the handover time. Then, the radio resources are established between the target RAN and the UE. A handover complete signalling is given between the source and the target access gateways.

In step 5, the target MME/UPE informs the Intersystem Mobility Anchor about the new, local IPv6 address PLA that the UE has obtained in the above steps 2 and 3.

In step 6, the Intersystem Mobility Anchor updates a local resolution list for this UE with its new primary local address PLA. The local resolution list associates a permanent personal address PPA of the UE with the PLA and will be described in more detail below.

In a step 7, the Intersystem Mobility Anchor confirms the update of the new, primary local IP address PLA at the target MME/UPE.

In step 8, the IP bearer service is established between the UE and the Intersystem Mobility Anchor via the target RAN and the target MME/UPE in the sense that all addresses are known within the network but not necessarily completely distributed.

In step 9, the target MME/UPE challenges the UE with the new primary local address PLA. This step can be seen as a part of the network registration between the UE and the new target MME/UPE which is described below in the handover phase III.

In step 10, the UE returns the extracted primary local address PLA. This triggers actions performed in the handover phase III.

Step 11 refers to the handover phase III. In this phase, the network registration between the UE and the target MME/UPE is performed. This step may include an action between the UE and the target MME/UPE to expose the IP address of the Intersystem Mobility Anchor to the UE to enable data packet transmission originating from the UE. Finally, the target MME is registered in the HSS of the UE.

Steps 12 to 13 refer to the data transmission for data packets destined to the UE. In order to enable such a data transmission, specific steps during network attachment and in the above described handover take place and will be specified in the following.

Network Attachment takes place at the first power-on of the user equipment UE and also during the handover phase in which the UE detects a new available access system. When attaching to a 3GPP access system AG1 or AG2 as shown in Fig. 1, a given local IPv6 prefix is assigned by the new target MME/UPE. An example of such a given prefix is 3ffe:400:7a0:ba0d::/64. This prefix indicates a range of IPv6 addresses. In the embodiment described herein, the first address of this given local IPv6 range is used by default by the UE as its primary local IPv6 address PLA. In the above example of a given local prefix, this address would be 3ffe:400:7a0:ba0d::1. The other addresses of this range may be used for enhanced network features.

Moreover, a unique, permanent personal IPv6 address PPA is allocated for the UE during first network attachment, i.e. during first power-on of the UE. This address is assigned by the Intersystem Mobility Anchor. An example of such an address is 3ffe:400:7a0::100. The Intersystem Mobility Anchor assigns this permanent personal address e.g. by means of HSS interrogation.

The Intersystem Mobility Anchor maintains a so called location resolution list. This list associates the permanent personal address PPA of a UE with the current location of the UE, i.e. the current primary local IPv6 address PLA. The above defined permanent personal address PPA of the UE belongs to a prefix in which the Intersystem Mobility Anchor resides. I.e., all data packets that are destined to a UE will always arrive at the 3GPP operator network in which the Intersystem Mobility Anchor is located.

After network attachment, the handover phase as described in Fig. 2 takes place. The following steps are necessary in order to maintain tunnel-free service continuity when attaching to a new access system.

At first, the UE has to extract a new IP address from the prefix assigned by the new target MME/UPE to which to UE will be attached. This new address is the first address specified by the prefix as it is the case in the above described first network attachment. The new IP address may be 3ffe:400:7a0:ba0c::1 which is now the new current primary local address PLA. The new target MME/UPE informs the Intersystem Mobility Anchor about this new primary local address PLA (step 3 of Fig. 2). Thereafter, the Intersystem Mobility Anchor updates its location resolution list for the UE with the new primary local address PLA. I.e., the above defined permanent personal address 3ffe:400:7a0::100 is now associated with the new primary local address 3ffe:400:7a0:ba0c::1 (step 6 of Fig. 2).

For data transmission of packets destined to the UE (step 12 of Fig. 2), the Intersystem Mobility Anchor uses the well-known proxy neighbor discovery mechanism to capture packets destined to the UE. Once captured, the Intersystem Mobility Anchor will insert a so-called Type 2 routing header in the captured packet. This header is a well known IPv6 routing header and corresponds to the first type routing header as defined in claim 1. The following actions will be performed with the packets in step 13 of Fig. 2 in order to reroute the packets: The primary local address PLA is placed in the destination IP address field of the captured packet. Furthermore, the permanent personal address PPA is placed as the first and only address in the newly inserted Type 2 routing header.

Due to the aforementioned actions, the packets are delivered in step 14 of Fig. 2 to the UE by the use of the personal local address PLA. Thereafter, the UE will switch the destination IP address in the packet with the permanent personal address PPA specified in the Type 2 routing header and re-route the packet. Since the new destination IP address is how the UE's PPA, the packet will be used by the UE and will not be routed out. Running applications of the UE see that the packet comes from the permanent personal address PPA.

For packets originating from an application in the UE, the following steps will be performed according to the invention (those steps are not indicated in Fig. 2): In the original data packet being addressed to a correspondent node, the current address of this node is indicated in the destination IP address field. The UE from which the packet originates will insert a Type 2 routing header in this packet, said header specifying the current address of the correspondent node as the first and only address. Furthermore, the UE will insert the address of the Intersystem Mobility Anchor in the destination IP address field of the data packet. Moreover, the permanent personal address PPA is placed by the UE as the first and only address in a newly inserted Type 5 routing header. At last, the primary local address PLA is placed in the source IP address field of the packet originating from the UE.

The data packet modified as described above will arrive at the Intersystem Mobility Anchor as the address of this anchor is placed in the destination IP address field. The Intersystem Mobility Anchor receiving such a packet will then switch the address in the Type 2 routing header with the address in the destination IP address. Hence, the packet will now have the address of the correspondent node as the destination address. Furthermore, the source IP address in the data packet will be replaced with the address in the Type 5 routing header. Hence, the packet will specify the permanent personal address PPA as the source. The data packet modified in the mobility anchor as described above will be routed to the current address of the correspondent node.

The above described Type 2 and Type 5 routing headers are well-known in the IPv6 protocol. The Type 2 routing header specifies the holding of destination addresses that a packet should go through before reaching the final destination. This header will hold all the addresses that will be switched when it reaches the current address in the destination field of the packet. The Type 5 routing header is similar in nature but will carry the switching addresses of the source address field of the data packet. The address switch in the Type 5 header will be done simultaneously when the address switch in the Type 2 header is done. This means that if a Type 5 routing header is present, there should always be a Type 2 routing header in the data packet, said Type 2 routing header having the same number of entries as the Type 5 routing header. This rule is not applicable vice versa.

According to the above described mechanism, the UE is always uniquely identified by its personal permanent address PPA. All packets destined to the UE will be addressed to the permanent personal address. Those packets will be captured by the Intersystem Mobility Anchor using proxy neighbor discovery. The Intersystem Mobility Anchor will use the Type 2 routing header to deliver the packets to the current local location of the UE, i.e. to the primary local address PLA. Packets that originate from the UE will use besides the Type 2 routing header also a Type 5 routing header to deliver the packets to the intended destination of a correspondent node.

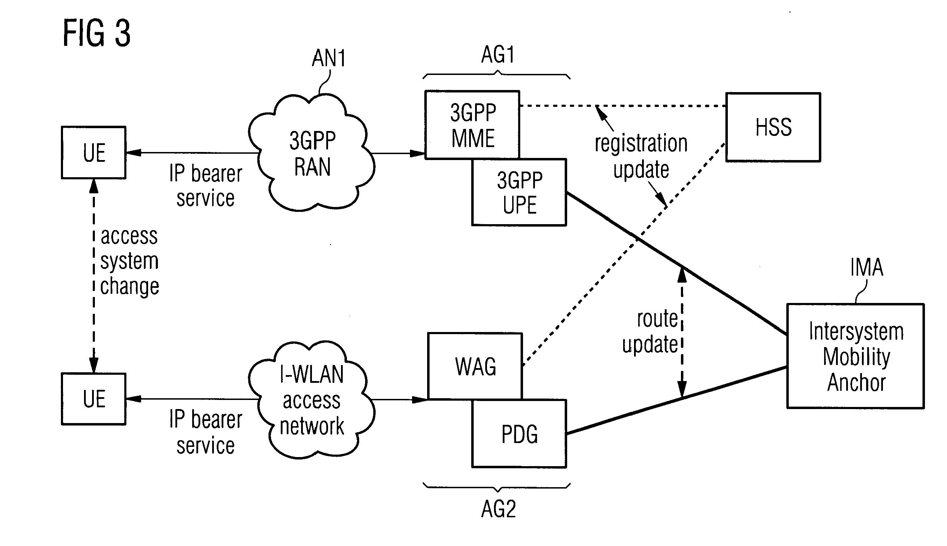

The above described embodiment of the invention may be used in the telecommunications system as shown in Fig. 1, i.e. for a handover between a legacy 3GPP access system and the new SAE/LTE access system. However, the invention may also be used for handovers between 3GPP access systems and non 3GPP access systems. Such a case is shown in Fig. 3.

Fig. 3 shows a scenario similar to Fig. 1. The only difference results in another mobile access network AN2 and another access gateway AG2. The access network AG2 is now an interworking WLAN access network I-WLAN and the access gateway is now an interworking WLAN gateway comprising the functional units WAG and PDG (WAG = WLAN Access Gateway; PDG = Packet Data Gateway). Those components are well known and will not be described hereinafter. The 3GPP RAN and the I-WLAN access network are regarded as edge domains, i.e. as network domains within which the UE requires and keeps the same IP address (IPedge) and where the movements of the UE are handled using a local mobility management protocol. Since the UE keeps the same IPedge address, the network-based mobility protocol properly updates routing information towards a local user plane anchor point which is the 3GPP UPE for the access gateway AG1 and the PDG for the I-WLAN access gateway AG2. As a consequence, all packets destined to the IPedge address of the UE are correctly routed towards the moving UE.

Analogously to the network in Fig. 1, any mobility event across the edge domains is handled by anchoring the traffic originating from the UE or destined to the UE to a fixed Intersystem Mobility Anchor IMA. In order to anchor the traffic, two different IP addresses will be associated to the UE, namely the IPedge address belonging to the local UE anchor point subnet and being the primary local IPv6 address as specified above and an IPGlobal address belonging to the subnet of the Intersystem Mobility Anchor and corresponding to the permanent personal IPv6 address as specified above. The permanent personal address is the address known at application level and used by the UE to communicate with correspondent nodes and valid for all the session duration. As this address does not change, it guarantees session continuity. The switching of addresses using Type 2 and Type 5 routing headers will be performed in the same way as described above. The switching takes care of updating the route from the Intersystem Mobility Anchor to the correct local user plane anchor point, associating each new acquired primary local address to the permanent personal address. The details for switching the addresses have been described in the foregoing.

The method as described above provides service continuity within heterogeneous mobile networks avoiding any tunnelling. The above described mobility management mechanism based on the use of IPv6 routing header facility combined with address switching proposes a less overhead than tunnelling to enable users to use for example new 3GPP SAE/LTE and legacy access systems or any other future access systems while maintaining the service continuity. The achieved overhead reduction leads to the required efficient use of mobile access network resources, whereas the efficient use of those resources is of vital interest for mobile network operators. The above specified mobility management mechanism is applicable for both handovers between 3GPP access systems (e.g. legacy UTRAN/GERAN and new SAE/LTE) and handovers between 3GPP and non 3GPP access systems (e.g. UTRAN/GERAN/SAE/LTE and non 3GPP radio technologies such as WLAN).

List of references:
[1] 3GPP TR 23.882, 3GPP System Architecture Evolution: Report on Technical Options and Conclusions, V0.11.0 (2006-02)

## Claims

1. A method for data transmission in a mobile telecommunications system having a mobility anchor (IMA), wherein:
a) a permanent address (PPA) is allocated by the mobility anchor (IMA) for a user device (UE);
b) when moving from a first mobile access network (AN1) connected to a first access gateway (AG1) to a second mobile access network (AN2) connected to a second access gateway (AG2), the user device (UE) obtains a local address (PLA) associated with the second mobile access network (AN2);
c) the second access gateway (AG2) informs the mobility anchor (IMA) about the local address (PLA);
d) the mobility anchor (IMA) associates the local address (PLA) with the permanent address (PPA) of the user device (UE);
e) first data packets being data packets destined to the permanent address (PPA) of the user device (UE) and/or second data packets being data packets originating from the permanent address (PPA) of the user device (UE) and destined to an address of a correspondent node are modified during transmission by
- inserting at least one routing header in the first and/or second data packets in order to include the local address (PLA) in the first and/or second data packets;
- changing the address stored in the at least one routing header such that the first data packets are transmitted via the mobility anchor (IMA) to the user device (UE) and/or the second data packets are transmitted via the mobility anchor (IMA) to the correspondent node.

2. The method according to claim 1, wherein in step e)
- the first data packets are modified by the mobility anchor (IMA) such that the local address (PLA) is inserted in the destination address field and the permanent address (PPA) is inserted in a first type routing header;
- the modified first data packets arriving in the user device (UE) are modified by the user device (UE) such that the address in the destination address field is replaced with the address in the first type routing header.

3. The method according to claim 2, wherein the mobility anchor (IMA) captures the first data packets for modification by a proxy neighbor discovery mechanism.

4. The method according to one of the preceding claims, wherein in step e)
- the second data packets are modified by the user device (UE) such that the local address (PLA) is inserted in the source address field, the address of the correspondent node is inserted in a first type routing header, the permanent address (PPA) is inserted in a second type routing header and the address of the mobility anchor (IMA) is inserted in the destination address field;
- the modified second data packets arriving in the mobility anchor (IMA) are modified by the mobility anchor (IMA) such that the address in the destination address field is replaced with the address in the first type routing header and the address in the source address field is replaced with the address in the second type routing header.

5. The method according to one of claims 2 to 4, wherein the first and/or second data packets are IPv6 data packets, the first type routing being a Type 2 routing header and/or the second type routing header being a Type 5 routing header.

6. The method according to one of the preceding claims, wherein a local network prefix specifying a range of addresses is allocated by the second access gateway (AG2) and the user device (UE) extracts in step b) one address of the range of addresses as the local address (PLA), preferably the first address in the range of addresses.

7. The method according to one of the preceding claims, wherein, when located in the first mobile access network (AN1), the user device (UE) obtains a first local address associated with the first mobile access network (AN1), the first local address being replaced in step b) by the local address obtained in step b).

8. The method according to claim 7, wherein a local network prefix specifying a range of addresses is allocated by the first access gateway (AG1) and the user device (UE) extracts one address of the range of addresses as the first local address, preferably the first address in the range of addresses.

9. The method according to one of the preceding claims, wherein the mobility anchor (IMA) maintains a location resolution list associating the permanent address (PPA) of the user device (UE) with a current local address (PLA) specifying the mobile access network (AN1, AN2) to which the user device (UE) is attached.

10. The method according to claim 9, wherein the mobility anchor (IMA) updates the location resolution list by the local address (PLA) associated with the second mobile access network (AN2), when the user device (UE) moves from the first mobile access network (AN1) to the second mobile access network (AN2).

11. The method according to one of the preceding claims, wherein the first and/or the second mobile access networks (AN1, AN2) are 3GPP access networks.

12. The method according to claim 11, wherein the 3GPP access networks comprise a GSM access network and/or a UMTS access network and/or a SAE/LTE access network.

13. The method according to one of the preceding claims, wherein one of the first and second mobile access networks (AN1, AN2) is a non 3GPP network, particularly a interworking WLAN network.

14. A mobile telecommunications system, comprising a mobility anchor (IMA), a first mobile access network (AN1) connected to a first access gateway (AG1) and a second mobile access network (AN2) connected to a second access gateway (AG2), wherein:
- the mobility anchor (IMA) is adapted to allocate a permanent address (PPA) for a user device (UE);
- when moving from the first mobile access network (AN1) to the second mobile access network (AN2), the user device (UE) is adapted to obtain a local address (PLA) associated with the second mobile access network (AN2);
- the second access gateway (AG2) is adapted to inform the mobility anchor (IMA) about the local address (PLA);
- the mobility anchor (IMA) is adapted to associate the local address (PLA) with the permanent address (PPA) of the user device (UE);
- the system enables a processing of data packets such that first data packets being data packets destined to the permanent address (PPA) of the user device (UE) and/or second data packets being data packets originating from the permanent address (PPA) of the user device (UE) and destined to an address of a correspondent node are modified during transmission by
- inserting at least one routing header in the first and/or second data packets in order to include the local address (PLA) in the first and/or second data packets;
- changing the address stored in the at least one routing header such that the first data packets are transmitted via the mobility anchor (IMA) to the user device (UE) and/or the second data packets are transmitted via the mobility anchor (IMA) to the correspondent node.

15. The mobile telecommunications system according to claim 14, wherein the system is adapted to perform a method according to one of claims 2 to 13.
